Europäisches Patentamt

European Patent Office

Office européen des brevets

(11) Publication number: **0 448 347 A2**

# EUROPEAN PATENT APPLICATION

(21) Application number: **91302359.4**

(51) Int. Cl.⁵: **C09D 17/00**

(22) Date of filing: **19.03.91**

(30) Priority: **20.03.90 JP 70342/90**

(43) Date of publication of application:
**25.09.91 Bulletin 91/39**

(84) Designated Contracting States:
**DE FR GB**

(71) Applicant: **NIPPON PAINT CO., LTD.**
**2-1-2, Oyodokita Kita-ku**
**Osaka-shi Osaka 530(JP)**

(72) Inventor: **Tachibana, Yoshiki**
**5-14-24, Onoharahigashi**
**Mino-shi, Osaka-fu(JP)**
Inventor: **Hayase, Tamiki**
**3-1-5, Yokotsutsumi**
**Tsurumi-ku, Osaka-fu(JP)**
Inventor: **Hamada, Hisanao**
**7-37, Hichijohigashimachi**
**Nara-shi, Nara-ken(JP)**
Inventor: **Kato, Hisao**
**2-39-7, Nishikinya**
**Hirakata-shi, Osaka-fu(JP)**

(74) Representative: **Perry, Robert Edward et al**
**GILL JENNINGS & EVERY 53-64 Chancery Lane**
**London WC2A 1HN(GB)**

(54) Pigment composition.

(57) The present invention provides a pigment composition which stably disperses pigments in a resin and does not have the problems of floating, increase of viscosity, decline of coating gloss, water resistance and alkaline resistance. The pigment composition comprises (a) a pigment grinding resin, (b) a pigment ground by said resin and (c) a cyclic compound having at least one electron attractive group which is directly bonded to the ring.

EP 0 448 347 A2

FIELD OF THE INVENTION

The present invention relates to a pigment composition which is used for coating, ink or plastic. In particular, the present invention relates to a resin composition in which a pigment is stably dispersed in a non-aqueous medium.

BACKGROUND OF THE INVENTION

Pigment compositions contain a pigment and a resin for grinding the pigment. When two more more pigments are formulated into the composition, the composition are often accompanied with the flocculation of the pigments, which brings about some problems, such as floating, increase of viscosity and decline of coating gloss. It is believed that the flocculation would be caused by that, although the pigments have electric charges on their surfaces, they are attracted with each other if they have opposite electric charges.

In order to obviate the above problems, Japanese Kokai Publications 166318/1985, 174939/1986 and 61623/1986 disclose pigment dispersants, and Japanese Kokai Publication 217769/1984 discloses a pigment grinding resin. However, they do not suggest to control the electric charges on the pigments. The polyamine pigment dispersants which are disclosed the Japanese Kokai Publications 166318/1985 and 174939/1986 adversely affect on water resistance and curing ability of the resulting paint, especially when formulated into a thermosetting melamine alkyd resin.

SUMMARY OF THE INVENTION

The present invention provides a pigment composition which stably disperses pigments in a resin and does not have the problems of floating, increase of viscosity, decline of coating gloss, water resistance and alkaline resistance. The pigment composition of the present invention comprises (a) a pigment grinding resin, (b) a pigment ground by said resin and (c) a cyclic compound having at least one electron attractive group which is directly bonded to the ring.

DETAILED DESCRIPTION OF THE INVENTION

According to the present invention, it is believed that the cyclic compound (c) would control the electric charge on the pigment particle surface to 0 or minus and prevent the flocculation of the pigment particles. The cyclic compound (c) has a cyclic ring to which at least one electron attractive group is directly bonded. Examples of the electron attractive groups are a halogen atom (e.g. fluorine, chlorine and bromine), a nitro group, a carboxyl group and an acid anhydride group, and preferred is halogen. Number of the electron attractive groups on the cyclic ring is not limited but preferably within the range of 2 to 6. The electron attractive groups can be the same or different, but it is preferred that at least two groups are the halogen atoms. Groups other than the electron attractive groups may be present on the ring. Examples of the other groups are a hydroxyl group, an alkyl group, a haloalkyl group, an ester group (especially formed from an aliphatic monohydric alcohol (e.g. methanol, ethanol etc.) and a carboxyl group on the ring) and an amide group (especially formed from a primary or secondary amine (e.g. ethylamine, diethylamine etc.) and a carboxylic group on the ring).

The cyclic ring of the compound (c) includes an aromatic ring (e.g. a benzene ring and a naphthalene ring); a saturated hydrocarbon ring (e.g. a cyclohexane ring) and the like.

Typical examples of the cyclic compound (c) of the present invention are a benzene compound (e.g. di-, tri-, tetra-, penta- or hexa-chlorobenzene, di-, tri-, tetra-, penta- or hexa-fluorobenzene, di-, tri-, tetra-, penta- or hexa-bromobenzene, bromodichlorobenzene, chlorobromobenzene, di-, tri-, tetra- or penta-chlorophenol, di- or trichlorotoluene, trifluorotoluene, dichloro- or trichloronitrobenzene, dibromonitrobenzene, dichlorobenzoic acid, trifluorotoluic acid, pentafluorobenzoic acid, dichlorophthalic acid, tetrachlorophthalic acid and tetrachlorophthalic anhydride), a naphthalene compound (e.g. tetrachloronaphthalene and dichloronaphthol), a cyclohexane compound (e.g. hexachlorocyclohexane), a condensed ring compound of the above listed compounds and the like. A compound prepared by chemically connecting more than two cyclic compounds, e.g. by reacting carboxylic groups on the cyclic compounds and polyol or polyamine compounds, may also be used as the cyclic compound (c). A typical example of such compound is a reaction product of dichlorobenzoic acid and 1,6-hexane diol.

The pigment (b) of the present invention is one which is generally used for coating, including a coloring pigment and an extender pigment. Typical examples of the pigments are titanium oxide, iron oxide red, iron oxide yellow, chrome Yellow, chrome vermillion, iron blue, azo red, quinacridone red, phthalocyanine blue,

2

calcium carbonate, barium sulfate, talc, clay and the like.

The pigment grinding resin (a) of the present invention may be one which is used for coating, including an acryl resin, an alkyd resin, a melamine-alkyd resin, a vinyl chloride resin, a chlorinated polyolefin, an acryl-urethane resin, an epoxy resin and the like.

The pigment composition of the presents invention may further contain an additive, for example, an organic solvent (e.g. xylene, Cellosolve acetates and methyl isobutyl ketone).

In the pigment composition of the present invention, the pigment (b) may be present in an amount of 1 to 1,000 parts by weight, preferably 10 to 20 parts by weight based on 100 parts by weight of the resin (a). The cyclic compound (c) may be present in an amount of 0.1 to 20 % by weight, preferably 0.1 to 10 % by weight. If the compound (c) is less than 0.1 % by weight, the flocculation of the pigment occurs. If the compound (c) is more than 20 % by weight, the viscosity of the composition is too high and the water resistance and alkaline resistance are deteriorated.

The pigment composition of the present invention can be prepared by mixing the above mentioned components, using, for example, a sand grind mill, a ball mill, a roll mill and the like.

In the pigment composition of the present invention, the flocculation of pigment does not occur, and floating, increase of viscosity, decline of coating gloss, water resistance and alkaline resistance are significantly improved. Although the present invention is not limited by a specific theory, it is believed that the cyclic compound (c) functions on the pigment surface and changes the electric charge on the surface to 0 or minus.

EXAMPLES

The present invention is illustrated by the following Examples which, however, are not to be construed as limiting the invention to their details.

Preparation of cyclic compounds (c)

A reaction vessel equipped with a heater, a stirrer, a refluxing apparatus and a thermometer was charged with the components as shown in Table 1, and mixed under the conditions as shown in Table 1 to obtain a compound (c).

Table 1

| | PREPARATION NUMBERS | | | | |
| | 1 | 2 | 3 | 4 | 5 |
|---|---|---|---|---|---|
| Xylene | 44.1 | – | – | – | 44.0 |
| Methyl isobutyl ketone | – | 80.0 | 90.0 | 97.6 | – |
| Cellosolve acetate | 44.1 | – | – | – | 43.5 |
| Stearyl alcohol | 5.8 | – | – | – | – |
| Tetrachloro-phthalic anhydride | 6.0 | – | 1.0 | – | – |
| Trichlorophenol | – | 20.0 | – | – | – |
| Trifluorotoluene | – | – | – | 2.4 | – |
| 1,6-Hexanediol | – | – | – | – | 2.5 |
| Dichlorophthalic acid | – | – | – | – | 10.0 |
| Temperature (°C) | 120 | 100 | 100 | 100 | 150 |
| Time (hours) | 5 | 1 | 1 | 1 | 3 |

Dimension is gram unless otherwise specified.

3

Preparation of pigment compositions (Examples 1 to 5 and Comparative Examples 1 to 7)

The components I as shown in Table 2 were mixed under the conditions shown in Table 2 using a sand grind mill to obtain a composition I, to which the components II shown lower in Table 2 were mixed to form a composition II.

The electric charges of the pigment were determined by putting two electrodes into the pigment composition and applying a voltage. The pigment particles which were moved to the anode had minus charge and those which were moved to the cathode had plus charge. The pigment particles which ware not moved had no charge. The results are also shown in Table 2.

Table 2

| | Examples | | | | | Comparative Examples | | | | | | |
|---|---|---|---|---|---|---|---|---|---|---|---|---|
| | 1 | 2 | 3 | 4 | 5 | 1 | 2 | 3 | 4 | 5 | 6 | 7 |
| **Composition I** | | | | | | | | | | | | |
| Preparation No. of compound (c) | Prep.1 | Prep.2 | Prep.3 | Prep.4 | Prep.5 | – | – | – | – | – | – | – |
| (parts by weight) | (4.2) | (25) | (20) | (20) | (4) | | | | | | | |
| Pigment name | #1 | #2 | #3 | #4 | #5 | #1 | #2 | #3 | #4 | #5 | #6 | #7 |
| (parts by weight) | (50) | (25) | (38) | (45) | (40) | (50) | (25) | (38) | (45) | (40) | (4) | (11) |
| Acryl resin varnish [1] | 30 | 45 | 35 | 35 | – | 30 | 45 | 35 | 35 | – | 85 | – |
| Alkyd resin varnish [2] | – | – | – | – | 38 | – | – | – | – | 38 | – | 46 |
| Xylene | 15.8 | 5 | 7 | – | 10 | 15.8 | 5 | 7 | – | 10 | 5 | 10 |
| Methyl isobutyl ketone | – | – | – | – | – | – | 20 | 20 | 20 | – | – | – |
| Cellosolve acetate | – | – | – | – | 8 | – | – | – | – | 8 | 6 | 8 |
| **Grinding time (hours)** | 0.5 | 2 | 0.5 | 0.5 | 0.5 | 0.5 | 2 | 0.5 | 0.5 | 0.5 | 2 | 2 |
| **Composition II** | | | | | | | | | | | | |
| Acryl resin varnish [1] | 60 | 168 | 107 | 120 | – | 60 | 168 | 107 | 120 | – | – | – |
| Alkyd resin varnish [2] | – | – | – | – | 33.5 | – | – | – | – | 35.5 | – | – |
| Melamine resin [3] | – | – | – | – | 22 | – | – | – | – | 22 | – | 17 |
| Xylene | – | 17 | 4 | 5 | – | – | 17 | 4 | 5 | – | – | 8 |
| Cellosolve acetate | 5 | – | – | – | 6 | 5 | – | – | – | 6 | – | – |
| **Pigment electric charge** | Minus | Minus | Minus | Minus | Minus | Plus | Plus | Plus | Plus | Plus | Minus | Minus |

EP 0 448 347 A2

#1   Titanium oxide available from Ishihara Sangyo Co., Ltd. as Tai Pake CR-97.

#2   Cinquacia red available from Tiba Geigy A.G. as Cinquacia Red Y.

#3   Synthesized iron oxide available from Titan Co., Ltd. as TAROX Yellow LLXLO.

#4   chrome Yellow available from Kikuchi Shikiso Co., Ltd. as 5G lead yellow.

#5   Iron oxide red available from Toda Kogyo Co., Ltd. as Toda Color KNO.

#6   Carbon black available from Mitsubishi Chemical Industries Ltd. as Carbon 2460B.

#7   Perylene Red available from BASF as Paliogen Red 3910 HD.

[1]   Available from Dainippon Ink & Chemicals Inc. as Acrylic FL-121.

[2]   Coconut oil-modified resin varnish having a nonvolatile content of 60, an acid value of 8 and an OH value of 80.

[3]   Available from Mitsui Toatsu Chemicals Inc. as Uban 128.

Physical properties of coatings

Ten parts by weight of the pigment composition or a pigment composition mixture as shown in Table 3 was prepared and diluted with xylene to a viscosity of 20sec/#4 Ford cup. It was coated on a metal plate and the resulting coating was evaluated with coating appearance, rub-out test, water resistance, alkaline resistance and gloss. The results are shown in Table 3.

Coating appearance: Each coating composition of Test No. 1 to 4 and Comparative Test No. 1 and 2 was flow-coated on a mild steal panel and dried at room temperature for 24 hours. The appearance of the dried film was visually evaluated. Each composition of Test No. 5 and 6 and Comparative Test No. 3 was flow-coated dried at room temperature for 30 minutes, followed by baking at 140 °C for 30 minutes. The appearance of the dried film was visually evaluated. In Table 3, good shows no defects and bad shows many defects.

Rub-out test: The coating composition was flow-coated on a mild steel panel. Near the center of the coated film was rubbed by a finger before drying up as drawing a circle and then dried at room temperature for 24 hours. A comparison was made between the rubbed portion and the unrubbed portion in color hue difference. In Table 3, good shows no color difference between the rubbed portion and the unrubbed portion, fairly good shows slight color difference and bad shows severe color difference.

Water and alkaline resistance: The pigment composition was spray-coated on a slate panel and dried at room temperature for 4 days. It was then dipped in water at 20 °C for another 4 days and then rinsed with water. Thereafter, the panel was dried and visually evaluated. An alkaline resistance test was conducted as generally described above, with the exception that a saturated lime solution was employed for dipping at 20 °C for 4 days instead of water. In Table 3, good shows no defects.

Gloss: The composition was flow-coated on a tin plate and allowed to stand at room temperature for 30 minutes, followed by baking at 140 °C for 30 minutes. The gloss of the surface was evaluated with 20 ° specular gloss using a gloss meter (available from Murakami Shikiken Co., Ltd.).

Table 3

| Test No. | Pigment composition (parts by weight) | Coating appearance | Rub-out test | Water resistance | Alkaline resistance | Gloss |
|---|---|---|---|---|---|---|
| 1 | Example 1 (10) | Good | Good | Good | Good | |
| 2 | Example 3 (10) | Good | Good | Good | Good | |
| 3 | Example 1 (5) Comp. Ex. 6 (5) | Good | Good | Good | Good | |
| 4 | Example 1 (5) Example 3 (5) | Good | Good | Good | Good | |
| 5 | Example 5 (10) | Good | | | | 84 |
| 6 | Example 5 (3) Comp. Ex. 7 (7) | Good | | | | 80 |
| Comp. Test No. 1 | Comp. Ex. 1 (5) Comp. Ex. 6 (5) | Bad | Bad | Good | Good | |
| 2 | Comp. Ex. 3 (9) Comp. Ex. 6 (1) | Bad | Fairly good | Good | Good | |
| 3 | Comp. Ex. 5 (3) Comp. Ex. 7 (7) | Bad | | | | 48 |

Blanks show that the tests have not been carried out.

## Claims

1. A composition comprising (a) a resin; (b) a pigment; and (c) a cyclic compound having at least one electron-attractive group which is directly bonded to the cyclic ring.

2. A composition according to claim 1, wherein the electron-attractive group or groups are selected from halogen atoms, nitro groups, carboxyl groups, acid anhydride groups, and mixtures thereof.

3. A composition according to claim 1 or claim 2, wherein the cyclic compound has 2 to 6 of the electron-attractive groups on the cyclic ring.

4. A composition according to claim 3, wherein the cyclic compound is di-, tri-, tetra-, penta- or hexa-chlorobenzene, di-, tri-, tetra-, penta- or hexa-fluorobenzene, di-, tri-, tetra-, penta- or hexa-bromobenzene, bromodichlorobenzene, chlorobromobenzene, di-, tri-, tetra- or penta-chlorophenol, di- or trichlorotoluene, trifluorotoluene, dichloro- or trichloronitrobenzene, dibromonitrobenzene, dichlorobenzoic acid, trifluorotoluic acid, pentafluorobenzoic acid, dichlorophthalic acid, tetrachlorophthalic acid, tetrachlorophthalic anhydride, tetrachloronaphthalene, dichloronaphthol, hexachlorocyclohexane, or a condensed ring compound thereof.

5. A composition according to any preceding claim, wherein the resin is an acrylic resin, an alkyd resin, a melamine-alkyd resin, a vinyl chloride resin, a chlorinated polyolefin, an acryl-urethane resin, an epoxy resin, or a mixture thereof.

6. A composition according to any preceding claim, which comprises 0.1 to 20% by weight of the cyclic compound.

7. A composition according to any preceding claim, which comprises 1 to 1,000 parts by weight of the pigment per 100 parts by weight of the resin.

8. A composition according to any preceding claim, wherein the resin is a pigment grinding resin and the pigment is ground by the resin.